# EUROPÄISCHE PATENTSCHRIFT

(11) **EP 0 818 073 B1**
(45) Veröffentlichungstag und Bekanntmachung des Hinweises auf die Patenterteilung: **21.10.1998**
(21) Anmeldenummer: 96907335.2
(22) Anmeldetag: 01.03.1996
(51) Int. Cl.: H02G 3/04, H02G 5/06, H01R 25/14

(54) **SAMMELSCHIENENSYSTEM**
BUSBAR SYSTEM
JEU DE BARRES OMNIBUS

(30) Priorität: 28.03.1995 DE 19511283
(43) Veröffentlichungstag der Anmeldung: 14.01.1998
(73) Patentinhaber: Rittal-Werk Rudolf Loh GmbH & Co. KG, 35745 Herborn (DE)
(72) Erfinder: BIERMEIER, Eberhard, D-35606 Solms (DE); OUSMANE, Mouhamadou, D-35039 Marburg (DE); WAGENER, Hans, D-35716 Dietzhölztal (DE)
(74) Vertreter: Fleck, Hermann-Josef, Dr.-Ing.
(86) Internationale Anmeldenummer: EP9600869
(87) Internationale Veröffentlichungsnummer: WO9630984

(56) Entgegenhaltungen:
- EP-A- 0 455 563
- US-A- 5 274 194

## Beschreibung

Die Erfindung betrifft ein Sammelschienensystem mit Stromsammelschienen, die in einem wannenartigen, sich über die Länge der Stromsammelschienen erstreckenden Befestigungsunterteil angeordnet sind, einen senkrecht zu der Befestigungsfläche des Befestigungsunterteils stehenden Klemmschenkel aufweisen, auf die mit Anschlußkontakten versehene Adapter aufsteckbar und mittels Abdeckungen abdeckbar sind, wobei die Adapter mittels mechanischer Rastverbindungen an dem Befestigungsunterteil festlegbar sind.

Ein Sammelschienensystem dieser Art ist durch die DE 38 11 456 C2 bekannt. Dabei lassen sich die Abdeckung und Adapter über als Rastverbindungen ausgebildete mechanische Verbindungen mit dem Befestigungsunterteil verbinden. Da die elektrische Verbindung zwischen den Anschlußkontakten der Adapter und den Klemmschenkeln der Stromsammelschienen selbst nicht verriegelt oder verrastet sind, kommt es entscheidend auf die mechanische Verbindung an. Insbesondere bei großen und schweren Adaptern besteht die Gefahr, daß sich die mechanische Verbindung einseitig lockern oder lösen kann.

Es ist Aufgabe der Erfindung, ein Sammelschienensystem der eingangs erwähnten Art zu schaffen, bei dem die mechanische Verbindung zwischen dem Befestigungsunterteil und der Abdeckung sowie den aufgesetzten Adaptern wesentlich verbessert ist.

Diese Aufgabe wird nach der Erfindung dadurch gelöst, daß das Befestigungsunterteil in Längsrichtung beidseitig jeweils eine Außenwand und eine Innenwand trägt, die eine längsgerichtete Rastaufnahme bilden, daß die Außenwände zusätzlich einen nach außen gerichteten Rastlängssteg aufweisen, daß in die längsgerichteten Rastaufnahmen mit Raststeg versehene Rastfedern der parallel zu den Stromsammelschienen verlaufenden Seitenwände der Abdeckung und der Adaptergehäuse einrastbar sind und daß an dem Adaptergehäuse festlegbare Zusatzteile mit Rastfedern an den nach außen gerichteten Rastlängsstegen der Außenwände des Befestigungsunterteils als Kippsicherung einrasten. Mit den an den Adaptergehäusen festlegbaren Zusatzteilen werden die Außenwände am Ausweichen nach außen gehindert und zwar an allenStellen, an denen Adapter mit den Stromsammelschienen verbunden werden. Auf diese Weise werden die in den längsgerichteten Rastaufnahmen eingerasteten Rastfedern der Abdeckung und der Adapter verriegelt und diese Teile kippsicher mit dem Befestigungsunterteil verbunden.

Ist dabei zusätzlich vorgesehen, daß die Innenwände des Befestigungsunterteils nach innen gerichtete Rastlängsstege aufweisen und daß die Stromsammelschienen aufnehmende Halter von den nach innen gerichteten Rastlängsstegen der Innenwände im Befestigungsunterteil gehalten sind, dann lassen sich die Halter für die Stromsammelschienen in das Befestigungsunterteil einrasten. Zur axialen Fixierung braucht dann nur noch vorgesehen sein, daß die Halter mittels Klemmschrauben axial unverschiebbar in dem Befestigungsunterteil festgelegt sind.

Um eine eindeutige Rastverbindung der in die längsgerichteten Rastaufnahmen eingeführten Rastfedern sicherzustellen, ist nach einer Ausgestaltung vorgesehen, daß die längsgerichteten Rastaufnahmen einen Anschlag aufweisen, der die Einrastbewegung der mit Raststeg versehenen Rastfedern der Abdeckung und des Adaptergehäuses begrenzen. Die Verteilung der Rastelemente und des Anschlages in den Rastaufnahmen ist nach einer Ausgestaltung so vorgenommen, daß an den Außenwänden in die Rastaufnahmen ragende Raststege und an den Innenwänden die in die Rastaufnahmen ragenden Anschläge angeformt sind oder umgekehrt.

In vielen Fällen reicht eine Ausgestaltung aus, die dadurch gekennzeichnet ist, daß die als Kippsicherung dienenden Rastfedern der Zusatzteile an dem nach außen gerichteten Rastlängssteg der oberen Außenwand einrasten.

Ist der Adapter als Geräteadapter ausgebildet, dann kann am Adaptergehäuse ein Kontaktblock festgelegt werden, der Anschlußklemmen aufnimmt. Wird der Kontaktblock mit einem Deckel verschlossen, dann kann dieser die Funktion des Zusatzteils übernehmen und mit einer Rastfeder als Kippsicherung dienen.

Die Erfindung wird anhand eines in den Zeichnungen dargestellten Ausführungsbeispiels näher erläutert. Es zeigen:
- Fig. 1: in perspektivischer Ansicht ein Befestigungsunterteil mit drei Stromsammelschienen, die teilweise mit einer Abdeckung abgedeckt sind, und
- Fig. 2: schematisch die mechanische Verbindung mit Kippsicherung zwischen einem als Geräteadapter ausgebildeten Adapter und dem Befestigungsunterteil des Sammelschienensystems.

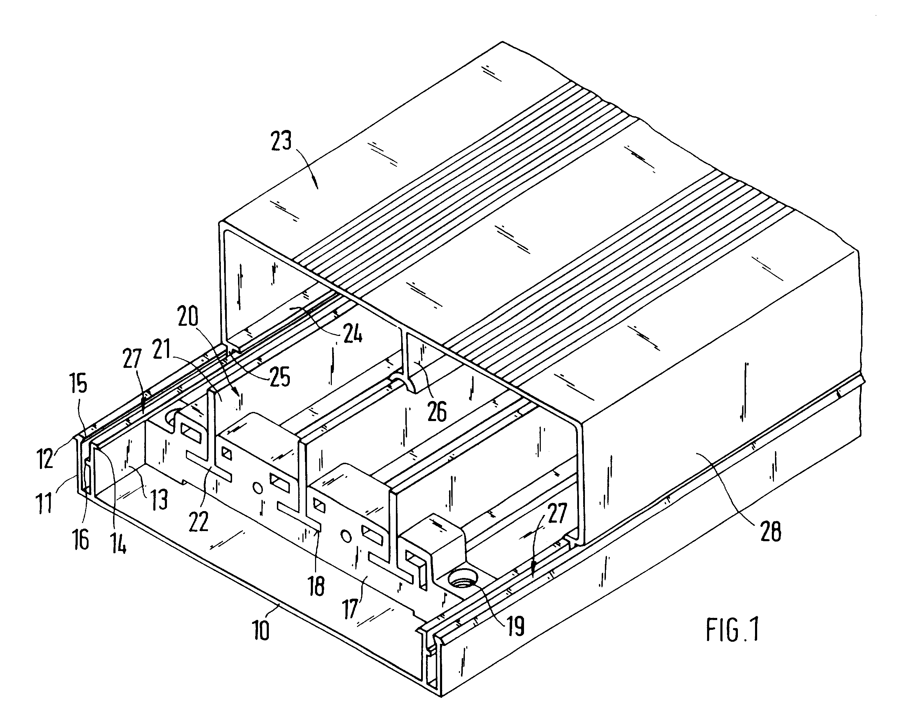

Das Sammelschienensystem nach Fig. 1 ist dreipolig ausgelegt. In einem wannenartigen Befestigungsunterteil 10 sind drei Stromsammelschienen 20 untergebracht. Die Längsseitenwände des Befestigungsunterteils 10 sind mit Außenwand 11 und Innenwand 13 jeweils doppelwandig ausgebildet und bilden längsgerichtete Rastaufnahmen 27. Dabei sind an den Außenwänden 11 nach außen gerichtete Rastlängsstege 12 und an den Innenwänden 13 nach innen gerichtete Rastlängsstege 14 angeformt. In den Rastaufnahmen 27 tragen die Außenwände Anschläge 16 in Form von Längsstegen, die die Einsteckbewegung von Rastfedern begrenzen, während die Innenwände 13 in die Rastaufnahmen 27 ragende Rastlängsstege 15 tragen oder umgekehrt. Die Innenwände 13 tragen zusätzlich nach innen gerichtete Rastlängsstege 14, die in das Befestigungsunterteil 10 eingerastete Halter 17 zur Aufnahme der Stromsammelschienen 20 festhalten. Damit diese Halter 17 axial in dem Befestigungsunterteil 10 festgelegt werden können, trägt der Halter 17 Klemmschrauben 19 zum Verspannen des Halters 17 zwischen dem Boden des Befestigungsunterteils 10 und den Rastlängsstegen 14.

Der Halter 17 ist mit im Querschnitt T-förmigen Aufnahmen 18 versehen, in die die mit Halteschenkel 22 und Klemmschenkel 21 versehenen T-förmigen Stromsammelschienen 20 eingeschoben und darin gehalten sind. Die Klemmschenkel 21 der Stromsammelschienen 20 stehen dabei senkrecht zur Befestigungsfläche, d.h. zum Boden des Befestigungsunterteils 10.

An den durch Adapter nicht belegten Stellen werden die Stromsammelschienen 20 mittels Abdeckungen 23 berührungssicher abgedeckt. Die Seitenwände 28 dieser Abdeckungen 23 laufen in horizontal nach innen gerichtete Stege 24 aus, die eine Rastfeder 25 tragen. Diese Rastfedern 25 sind in die Rastaufnahmen 27 eingerastet, wobei die anschläge 16 die Einführbewegung begrenzen.

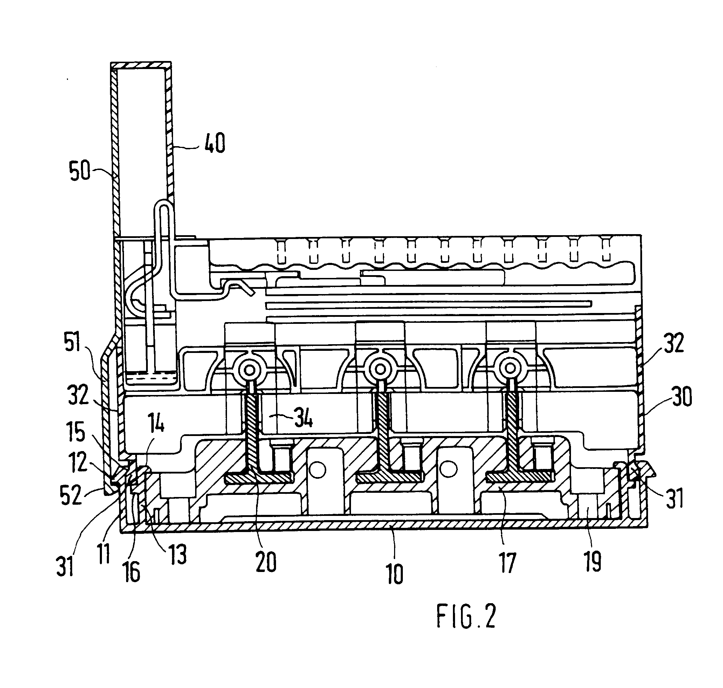

Der teilweise Schnitt in Fig. 2 zeigt einen als Geräteadapter ausgebildeten Adapter, der auf die Stromsammelschienen 20 aufgesteckt ist, wobei U-förmige Anschlußkontakte 34 den elektrischen Kontakt herstellen. Die parallel zu den Stromsammelschienen 20 verlaufenden Seitenwände 32 des Adaptergehäuses 30 laufen in Rastfedern 31 aus, die in die Rastaufnahmen 27 zwischen Innenwände 13 und Außenwände 11 des Befestigungsunterteils 10 eingerastet sind.

Wird mit dem Adaptergehäuse 30 ein Anschlußklemmen für die von den Anschlußkontakten 34 kommenden Leitungen verbunden, was durch Rast- oder Schraubverbindungen erfolgen kann, dann kann mit einem Deckel 50 als Zusatzteil eine Kippsicherung für den Geräteadapter realisiert werden. Der Deckel 50 verschließt den Kontaktblock 40 und weist eine Rastfeder 51 mit Raststeg 52 auf. Diese Rastfeder 51 verrastet mit dem Rastlängssteg 12 der Außenwand 11. Dabei ist die Befestigung des Sammelschienensystems so, daß diese Außenwand 11 oben angeordnet ist, wenn eine horizontale Montage der Stromsammelschienen 20 gewünscht ist.

Selbstverständlich lassen sich beide Außenwände 1 1 des Befestigungsunterteils 10 mittels Rastfedern 51 von Zusatzteilen verriegeln, d.h. gegen Ausweichen nach außen absichern. Diese Art Verriegelung legt den Adapter kippsicher am Sammelschienensytem fest, wobei die Zusatzteile am Adaptergehäuse 30 in verschiedener Weise angebracht werden können.

## Patentansprüche

1. Sammelschienensystem mit Stromsammelschienen (20), die in einem wannenartigen, sich über die Länge der Stromsammelschienen (20) erstreckenden Befestigungsunterteil (10) angeordnet sind, einen senkrecht zu der Befestigungsfläche des Befestigungsunterteils (10) stehenden Klemmschenkel aufweisen, auf die mit Anschlußkontakten versehene Adapter aufsteckbar und mittels Abdeckungen abdeckbar sind, wobei die Adapter mittels mechanischer Rastverbindungen an dem Befestigungsunterteil festlegbar sind,
dadurch gekennzeichnet,
daß das Befestigungsunterteil (10) in Längsrichtung beidseitig jeweils eine Außenwand (11) und eine Innenwand (13) trägt, die eine längsgerichtete Rastaufnahme (27) bilden,
daß die Außenwände (11) zusätzlich einen nach außen gerichteten Rastlängssteg (12) aufweisen,
daß in die längsgerichteten Rastaufnahmen (27) mit Raststeg versehene Rastfedern (25,31) der parallel zu den Stromsammelschienen (20) verlaufenden Seitenwände (28,32) der Abdeckung (23) und der Adaptergehäuse (30) einrastbar sind und
daß an dem Adaptergehäuse (30) festlegbare Zusatzteile (50) mit Rastfedern (51) an den nach außen gerichteten Rastlängsstegen (12) der Außenwände (11) des Befestigungsunterteils (10) als Kippsicherung einrasten.

2. Sammelschienensystem nach Anspruch 1,
dadurch gekennzeichnet,
daß die Innenwände (13) des Befestigungsunterteils (10) nach innen gerichtete Rastlängsstege (14) aufweisen und
daß die Stromsammelschienen (20) aufnehmende Halter (17) von den nach innen gerichteten Rastlängsstegen (14) der Innenwände (13) im Befestigungsunterteil (10) gehalten sind.

3. Sammelschienensystem nach Anspruch 1 oder 2,
dadurch gekennzeichnet,
daß die längsgerichteten Rastaufnahmen (27) einen Anschlag (16) aufweisen, der die Einrastbewegung der mit Raststeg versehenen Rastfedern (25,31) der Abdeckung (23) und des Adaptergehäuses (30) begrenzen.

4. Sammelschienensystem nach einem der Ansprüche 1 bis 3,
dadurch gekennzeichnet,
daß an den Außenwänden (11) in die Rastaufnahmen (27) ragende Raststege (15) und an den Innenwänden (13) die in die Rastaufnahmen (27) ragenden Anschläge (16) angeformt sind oder umgekehrt.

5. Sammelschienensystem nach einem der Ansprüche 1 bis 4,
dadurch gekennzeichnet,
daß die als Kippsicherung dienenden Rastfedern (51) der Zusatzteile (50) an dem nach außen gerichteten Rastlängssteg (12) der oberen Außenwand (11) einrasten.

6. Sammelschienensystem nach einem der Ansprüche 1 bis 5,
dadurch gekennzeichnet,
daß der Adapter als Geräteadapter ausgebildet ist, an dessen Adaptergehäuse (30) ein Kontaktblock (40) festlegbar ist, und
daß ein den Kontaktblock (40) abdeckender Deckel als Zusatzteil (50) eine Rastfeder (51) als Kippsicherung trägt.

7. Sammelschienensystem nach einem der Ansprüche 2 bis 6,
dadurch gekennzeichnet,
daß die Halter (17) mittels Klemmschrauben (19) axial unverschiebbar in dem Befestigungsunterteil (10) festgelegt sind.

## Claims

1. Bus bar system, including bus bars (20), which are disposed in a trough-like lower mounting part (10) extending over the length of the bus bars (20) and have a clamping portion which lies perpendicular to the mounting face of the lower mounting part (10), over which bus bars adapters provided with connection contacts are placeable, and said bus bars are coverable by means of coverings, the adapters being securable on the lower mounting part by means of mechanical locking connections, characterised in that the lower mounting part (10) is provided on each side with an external wall (11) and an internal wall (13) when viewed with respect to the longitudinal direction, and such walls form a longitudinally orientated locking receiver (27), in that the external walls (11) additionally have an outwardly orientated longitudinal locking rib (12), in that locking tongues (25,31) of the lateral walls (28,32) of the covering (23) and of the adapter housings (30) can be locked in position in the longitudinally orientated locking receivers (27), said locking tongues being provided with a locking rib, and said lateral walls extending parallel to the bus bars (20), and in that additional parts (50), which are securable on the adapter housing (30), lock in position on the outwardly orientated longitudinal locking ribs (12) of the external walls (11) of the lower mounting part (10) by means of locking tongues (51) for preventing a pivotal movement.

2. Bus bar system according to claim 1, characterised in that the internal walls (13) of the lower mounting part (10) have inwardly orientated longitudinal locking ribs (14), and in that holders (17), which accommodate the bus bars (20), are retained in the lower mounting part (10) by the inwardly orientated longitudinal locking ribs (14) of the internal walls (13).

3. Bus bar system according to claim 1 or 2, characterised in that the longitudinally orientated locking receivers (27) each have a stop member (16), which defines the locking-in movement of the locking tongues (25,31) of the covering (23) and of the adapter housing (30), said tongues being provided with a locking rib.

4. Bus bar system according to one of claims 1 to 3, characterised in that locking ribs (15), which protrude into the locking receivers (27), are moulded on the external walls (11), and stop members (16), which protrude into the locking receivers (27), are moulded on the internal walls (13), or vice versa.

5. Bus bar system according to one of claims 1 to 4, characterised in that the locking tongues (51) of the additional parts (50) serve as a means for preventing a pivotal movement and lock in position on the outwardly orientated longitudinal locking rib (12) of the upper external wall (11).

6. Bus bar system according to one of claims 1 to 5, characterised in that the adapter is configured as an appliance adapter, a contact block (40) being securable on the housing (30) of said adapter, and a cover, which serves as additional part (50) and covers the contact block (40), is provided with a locking tongue (51) as the means for preventing a pivotal movement.

7. Bus bar system according to one of claims 2 to 6, characterised in that the holders (17) are axially non-displaceably secured in the lower mounting part (10) by means of clamping screws (19).

## Revendications

1. Jeu de barres omnibus avec des barres omnibus (20) qui sont disposées dans une infrastructure de fixation (10) en forme de cuve couvrant la longueur des barres omnibus, barres omnibus qui présentent une aile de serrage orientée perpendiculairement à la surface de fixation de l'infrastructure de fixation (10), barres omnibus sur lesquelles des adaptateurs munis de bornes de contact peuvent être enfichés, lesdits adaptateurs pouvant être recouverts, où les adaptateurs peuvent être assujettis sur l'infrastructure de fixation au moyen de liaisons par encliquetage mécanique,
caractérisé
en ce que l'infrastructure (10) porte, de part et d'autre en direction longitudinale, une paroi extérieure (Il) et une paroi intérieure (13), qui constituent ensemble un récepteur d'encliquetage (27) de direction longitudinale,
en ce que les parois extérieures (11) présentent en outre une nervure longitudinale d'encliquetage (12) dirigée vers l'extérieur,
en ce que dans les récepteurs d'encliquetage (27) de direction longitudinale peuvent être encliquetés des ressorts d'encliquetage (25, 31), munis d'une nervure d'encliquetage, des parois latérales (28, 32) parallèles aux barres omnibus (20) du couvercle (23) et des boîtes d'adaptateur (30), et
en ce que sur les boîtes d'adaptateur (30), s'encliquettent, en tant que sécurité contre le basculement, des pièces complémentaires (50) par des ressorts d'encliquetage (51) dans les nervures longitudinales d'encliquetage (12) orientées vers l'extérieur des parois longitudinales (11) de l'infrastructure de fixation (10).

2. Jeu de barres omnibus suivant la revendication 1,
caractérisé
en ce que les parois intérieures (12) de l'infrastructure de fixation (10) présentent des nervures longitudinales d'encliquetage (14) dirigées vers l'intérieur, et
en ce que les supports (17) recevant les barres omnibus (20) sont fixés dans l'infrastructure de fixation (10) par les nervures longitudinales d'encliquetage (14) dirigées vers l'intérieur des parois intérieures (13).

3. Jeu de barres omnibus suivant la revendication 1 ou 2,
caractérisé
en ce que les récepteurs d'encliquetage (27) dirigées longitudinalement présentent une butée (16), qui limite la course d'encliquetage des ressorts d'encliquetage (25, 31) munis d'une nervure d'encliquetage du couvercle (23) et de la boîte d'adaptateur (30).

4. Jeu de barres omnibus suivant l'une quelconque des revendications de 1 à 3,
caractérisé
en ce que sur les parois extérieures (11) sont formées des nervures d'encliquetage (15) pénétrant dans les récepteurs d'encliquetage (27) et en ce que sur les parois intérieures (13) sont formées des butées (16) pénétrant dans les récepteurs d'encliquetage (27), ou inversement.

5. Jeu de barres omnibus suivant l'une quelconque des revendications de 1 à 4
caractérisé
en ce que les ressorts d'encliquetage (51) servant de sécurité contre le basculement des pièces complémentaires (50) s'encliquettent dans la nervure longitudinale d'encliquetage (12) dirigée vers l'extérieur de la paroi extérieure supérieure (11).

6. Jeu de barres omnibus suivant l'une quelconque des revendications de 1 à 5
caractérisé
en ce que l'adaptateur a la forme d'un adaptateur d'appareillage, sur la boîte (30) duquel peut être fixé un bloc à bornes de contact (40), et
en ce qu'un couvercle recouvrant le bloc à bornes de contact (40) porte une pièce complémentaire (50) servant de sécurité contre le basculement.

7. Jeu de barres omnibus suivant l'une quelconque des revendications de 2 à 6
caractérisé
en ce que les supports (11) sont, au moyen de vis de serrage (19), fixés à l'abri du glissement dans l'infrastructure de fixation (10).
